# EUROPÄISCHE PATENTSCHRIFT

(11) **EP 0 548 482 B1**
(45) Veröffentlichungstag und Bekanntmachung des Hinweises auf die Patenterteilung: **09.08.1995**
(21) Anmeldenummer: 92117493.4
(22) Anmeldetag: 14.10.1992
(51) Int. Cl.: A21C 9/08

(54) **Verfahren und Vorrichtung zur Ansteuerung einer Kopfmaschine und wenigstens einer Nachfolgeeinrichtung**
Method and device for controlling a dough divider and at least one subsequent machine
Procédé et dispositif de commande pour diviseur de pâte et au moins un dispositif consécutif

(30) Priorität: 24.12.1991 DE 4142931
(43) Veröffentlichungstag der Anmeldung: 30.06.1993
(73) Patentinhaber: Werner & Pfleiderer GmbH, 70469 Stuttgart (DE)
(72) Erfinder: Knost, Dieter, Dipl.-Ing., NL-7188 Fichtenau (DE); Kock, Gerd, Dipl.-Ing., W-8804 Dinkelsbühl (DE)

(56) Entgegenhaltungen:
- EP-A- 0 190 906
- DE-A- 2 109 363

## Beschreibung

Die Erfindung betrifft ein Verfahren nach dem Oberbegriff des Anspruches 1 und eine Vorrichtung zur Durchführung des Verfahrens nach dem Oberbegriff des Anspruches 7.

Anlagen, bestehend aus einer Kopfmaschine und Nachfolgeeinrichtungen, zur Aufbereitung von Teigstücken sind in der handwerklichen als auch in der industriellen Backtechnik hinreichend bekannt.
Dabei muss die Arbeitsgeschwindigkeit der aus Teigteil-und Wirkmaschine bestehenden Kopfmaschine mit wenigstens einer voll- oder halbautomatisch betriebenen Nachfolgeeinrichtung, wie z.B. Brötchenanlage, Zwischengärschrank, Langroller, etc. koordiniert werden.

Hierbei sind unterschiedliche Antriebssysteme bekannt, die von einem zentralen über Kette/Kardan und Kupplung für die gesamte Anlage versehenen Antrieb, über Einzelantriebe für jede Maschine, welche über Federdruckbremse oder Hochleistungskupplung zu-und abschaltbar sind, reichen bis hin zu Antrieben, die mittels einer aufwendigen Elektronik über Drehzahlvergleich die Stromzufuhr des jeweils schneller laufenden elektrischen Antriebsmotor abschaltet, um so einen synchronen Lauf der Gesamtanlage und damit die exakte Übergabe der Teiglinge zu ermöglichen.

Um einer rationellen Produktion zu genügen, ist es erforderlich, dass in einer solchen Teigaufbereitungsanlage unterschiedliche Teigarten und Teiglingsgrössen bearbeit werden können. Hierbei ergeben sich aber zwangsweise veränderte Taktzeiten für die Kopfmaschine, die z.B. durch veränderte Gärzeiten im Zwischengärschrank und/oder Teigkonsistenz bzw. durch den Einsatz einer anderen Nachfolgeeinrichtung erforderlich werden.
Die Veränderung der Taktzeit der Kopfmaschine wird dabei über eine Geschwindigkeitsänderung (Getriebe) oder durch Verkürzung oder Verlängerung der Pausenzeiten zwischen den Förderhüben des Förderkolbens, der den Teig in die Messkammern presst, erreicht. Der Pressenddruck des Förderkolbens ist über Federelemente oder Hydraulik entsprechend der jeweiligen Teigart zwar einstellbar gestaltet, aber da der Förderkolben sofort seine Taktfrequenz erreicht, steht sofort der ganze Druck an und wird schlagartig auf den Teig übertragen.
Solche synchron und periodisch antreibbare Anlagen zur Aufbereitung von Teiglingen sind z.B. in der DE-PS 37 20 495 oder DE-PS 32 34 487 beschrieben.

Bei der in der DE-PS 32 34 487 beschriebenen Kopfmaschine handelt es sich um eine Teigteil- und Wirkmaschine in Trommelausführung. Die von dieser Kopfmaschine in Reihen gelieferten Teiglinge werden über Spreizbänder an ein Arbeitsband übergeben. Am Ende des Arbeitsbandes werden die Teiglinge an eine darunter mit Gärgutträgern bestückte Förderbahn übergeben. Der Vorschub dieser Förderbahn ist änderbar steuerbar durch einen eigenen Antriebsmotor, der über einen Kontakt beim Passieren jeder Teigreihe eingeschaltet und nach einer bestimmten Zeit wieder stillgesetzt wird. Hierzu sind auf einer Steuerwelle eine Reihe von Steuerscheiben vorgesehen, die jeweils mit einem Steuerschalter zusammenwirken, der über einen Programmschalter ansteuerbar ist. Hiermit kann der Absetzabstand der Teiglinge auf dem Gärgutträger verändert werden und somit die Anlage auf einfacher Weise an verschiedene Teigstückarten in Abhängigkeit von der Leistung der Kopfmaschine angepasst werden.
Die Antriebsregelung der Kopfmaschine ist hierbei nicht regelbar bzw. nicht im Zusammenhang mit einer exakten Absetzung der Teiglinge auf dem Gärgutträger. Nachteilig hierbei ist, dass für die Übergabe der Teiglinge von den Spreizbändern der Kopfmaschine in den Gärschrank mehrere Zwischentransporteinrichtungen und Übergabeeinrichtungen erforderlich sind und somit ergeben sich zwangsläufig Ungenauikeiten und ein relativ hoher Verschleiss.

Der Erfindung liegt die Aufgabe zugrunde, ein Verfahren der gattungsgemässen Art zu schaffen, mittels dessen eine äusserst schonende und der jeweiligen Teigart optimal angepassten Teigteilung sowie ein Synchronlauf beider Vorrichtungen in jeder Betriebsituation, insbesondere beim Hochfahren oder Wiederanfahren der Anlage erreichbar ist, und eine Vorrichtung zur Durchführung dieses Verfahrens anzugeben.

Diese Aufgabe wird bei einem Verfahren der gattungsgemässen Art durch die Merkmale im Kennzeichnungsteil des Anspruches 1 gelöst. Durch das erfindungsgemässe Verfahren der taktweisen Ansteuerung des Antriebsmotors der Kopfmaschine wird ein maschinenschonender und verschleissarmer Lauf der Kopfmaschine erreicht. Gleichzeitig wird eine äusserst teigschonende Arbeitsweise in Abhängigkeit der jeweiligen Teigart durch die Übertragung des Drehmomentes entlang einer einstellbaren Startrampe ermöglicht. Ferner wird ein Synchronlauf der Kopfmaschine und der Nachfolgeeinrichtung in jedem Betriebszustand, selbst schon beim Hochfahren oder beim Wiederhochverfahren (z.B. nach Not-Aus) der Anlage erreicht. Durch das erfindungsgemässe Antriebssystem lässt sich die Kopfmaschinen auf einfache Weise jeder beliebigen Nachfolgeeinrichtung mit regelbaren oder starrem Antrieb anpassen. Es wird eine schonende Teilung von Früchteteig bis hin zu Teigen mit einer langen Vorgare problemlos erreicht.

Innerhalb der Zeitspanne des Arbeitstaktes der Nachfolgeeinrichtung, nach der sich der Arbeitszyklus der Kopfmaschine richtet, lassen sich die einzelnen Parameter für die Übertragung des Drehmomentes variieren.

Gemäss Anspruch 2 wird eine optimale Abstimmung der Geschwindigkeiten der Gesamtanlage und eine 100% Übergabegenauigkeit erreicht.

Mit den Merkmalen des Anspruches 3 ist eine besonders vorteilhafte Anpassung der Arbeitsgeschwindigkeit und Teigschonung gegeben. Hiernach ist je nach erforderlicher Arbeitsgeschwindigkeit auch eine Begrenzung des Motorstroms und damit des Drehmoments möglich.

Entsprechend Anspruch 4 können besonders in kleineren Anlagen (handwerkliche Bäckerei) schnelle Anpassungen vorgenommen werden.

Entsprechend den Merkmalen des Anspruches 5 sind bevorzugte Einstellmöglichkeiten angezeigt.

Gemäss Anspruch 6 kann der Arbeitszyklus zwischen zwei verschiedenen Frequenzen ablaufen. Das wiederum bedeutet, dass die Abbremsung der Kopfmaschine bis auf eine bestimmte Frequenz heruntergeführt wird und an diesem Punkt der Arbeitszyklus von neuem beginnt. Somit liegt keine Stillstandszeit vor und es herrscht ein nahezu kontinuierlicher Lauf der Kopfmaschine.

Die der Erfindung zugrundeliegende Aufgabe wird bei einer Vorrichtung der gattungsgemässen Art durch die Merkmale im Kennzeichnungsteil des Anspruches 7 gelöst. Hiernach wird ein verschleissarmer und ruhiger Lauf der Kopfmaschine ermöglicht.
Es werden bei einem schrittweisen Betrieb der Kopfmaschine keine Hochleistungskupplung, die einen durchlaufenden Antrieb ständig zu- und wegschaltet oder eine Federdruckbremse an einem Getriebemotor bei einem Start/Stop-Betrieb mehr benötigt. Nach der Erfindung wird der Antriebsmotor über Start- und Bremsrampe mit einstellbaren Parametern gefahren.

Hiernach kann die Beschleunigungszeit so geregelt werden, dass der Druck am Teig sich langsam aufbaut und der Teig mittels regelbarer Taktzeit in die Messkammer gepresst wird.

Entsprechend den Merkmalen des Anspruches 8 ist in jedem Betriebszustand ein Synchronlauf gewährleistet, da die Kopfmaschine jeweils in Abhängigkeit der genauen Übergabeposition im Zwischengärschrank gestartet wird und somit in Abhängigkeit von der Geschwindigkeit des Zwischengärschrankes die Geschwindigkeit der Teigteilmaschine geregelt ist, wobei die einzelnen Taktzeiten des Förderkolbens innerhalb eines Arbeitszykluses der jeweiligen Teigart anpassbar sind.

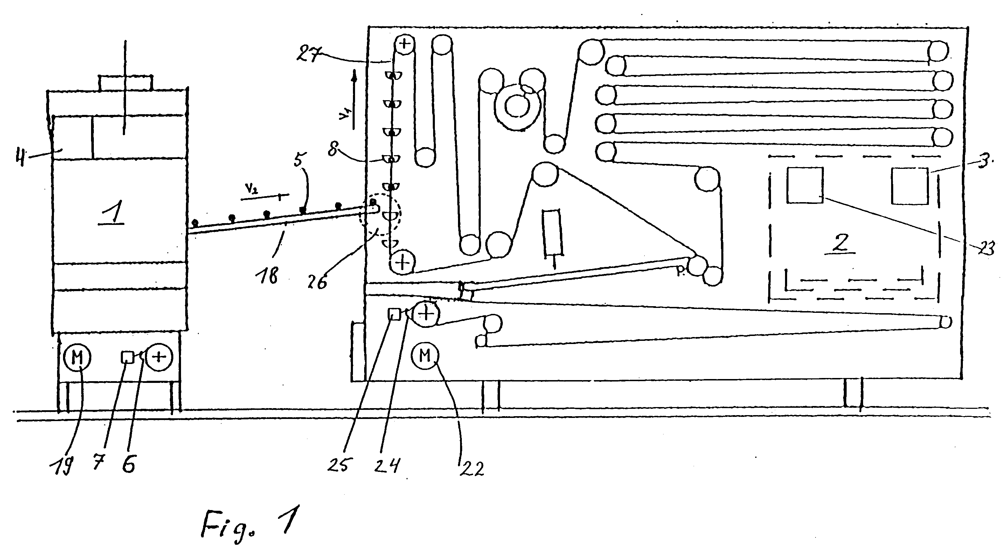

Die Erfindung wird nachstehend anhand einer Zeichnung und zwei Ausführungsbeispielen näher beschrieben.
Er zeigt
- Fig. 1: eine schematische Darstellung einer Kopfmaschine und Zwischengärschrank
- Fig. 2: einen prinzipiellen Aufbau einer Teigteil- und Rundwirkmaschine

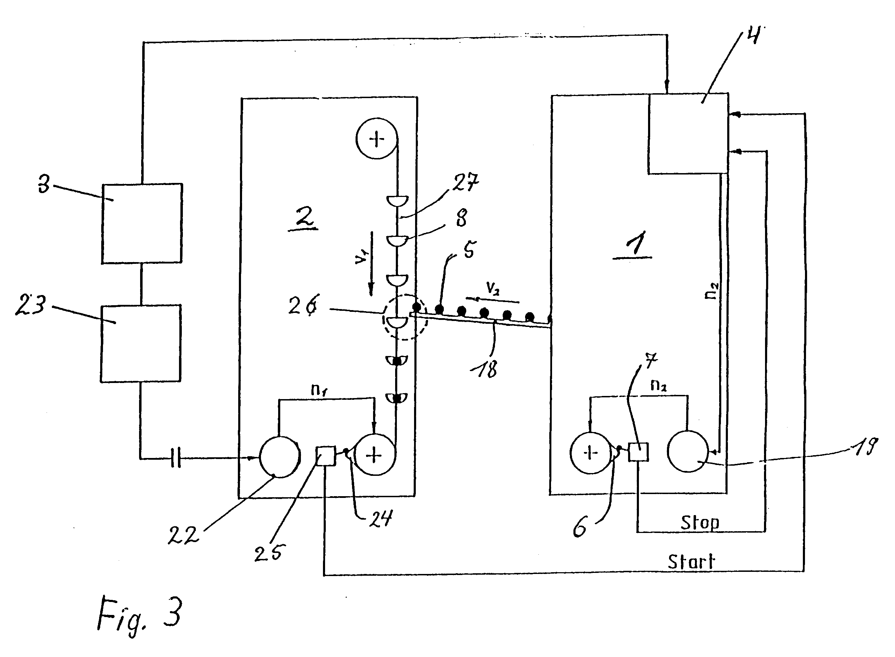

- Fig. 3: ein Schaltschema zur Ansteuerung einer Kopfmaschine mit Zwischengärschrank
- Fig. 4: ein Diagramm über den zeitlichen Ablauf eines Arbeitszyklus mit Pausenzeit

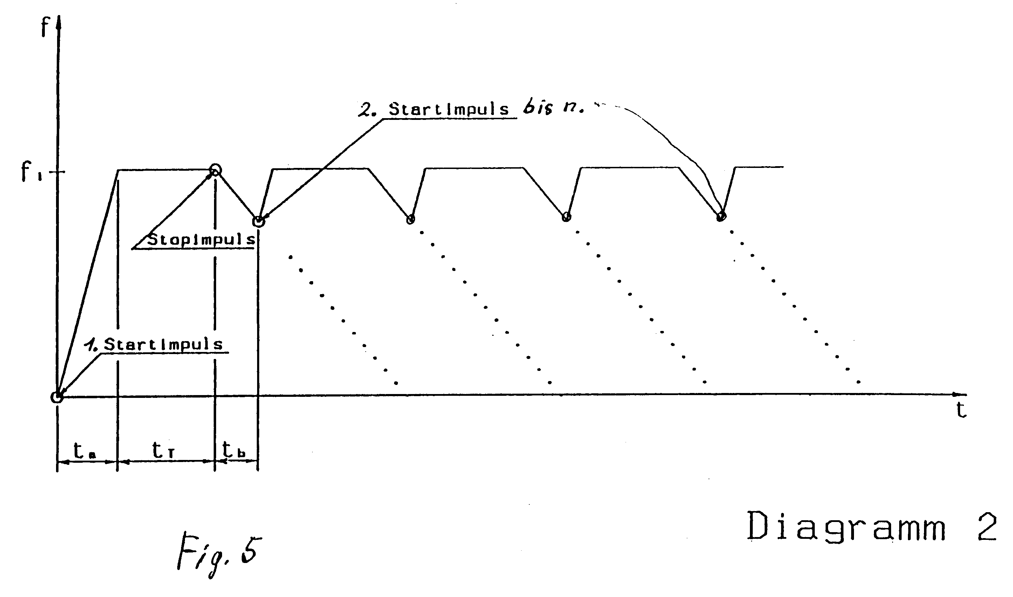

- Fig. 5: ein Diagramm des zeitlichen Ablauf eines Arbeitszyklus nach einer Jogfrequenz
In der Zeichnung ist die aus einer Teigteil- und Rundwirkmaschine bestehende Kopfmaschine mit 1 und der Zwischengärschrank mit 2 bezeichnet. Die in der Kopfmaschine 1 über die Drehschiebermesseinheit 13 abgeteilten Teiglinge 5 gelangen über den Trommelwirker 14 und Wirkband 17 auf die Spreizbänder 18 und von dort direkt in die Teigtassen 8 des Zwischengärschrankes 2. Zwecks Synchronlauf der Kopfmaschine 1 mit dem Zwischengärschrank 2 in jeder Betriebssituation, insbesondere beim Hochfahren oder Wiederanfahren der Anlage sind beide Antriebsmotore 19 bzw. 22 über einen Frequenzumformer 4 bzw. 23 steuerbar. Die Frequenzumformer 4 und 23 sind mit einer Steuereinrichtung 3 (die vorzugsweise als Speicherprogrammierbarer Steuerung SPS ausgebildet ist) verbunden. Die Arbeitsweise ist folgende.

Die Steuereinrichtung 3 gibt dem Frequenzumformer 23 des Zwischengärschranks 2 seine Arbeitsfrequenz und damit dessen Arbeitsgeschwindigkeit V₁ vor.
Dieses drückt sich wie folgt aus: An dem Frequenzumformer können verschiedene Frequenzen eingestellt werden und zu jeder Frequenz gehört eine andere Arbeitsgeschwindigkeit V₁. In der Steuereinrichtung 3 können unterschiedliche Programme abgelegt sein und zu jedem Programm gehört eine andere Frequenz.

In gleicher Weise gibt die Steuereinrichtung 3 an den Frequenzumformer 4 der Kopfmaschine und damit deren Arbeitsgeschwindigkeit V₂ vor. Desweiteren besteht auch die Möglichkeit, dass die Steuereinrichtung 3 einen Parametersatz vom Frequenzumformer 4 aktiviert und die Kopfmaschine 1 mit diesem Parametersatz und den Arbeitszyklus mit mit diesem Parametersatz ablaufen lässt. Die Summe der Parameter aus dem Parametersatz bestimmt die Art des Arbeitszyklus.

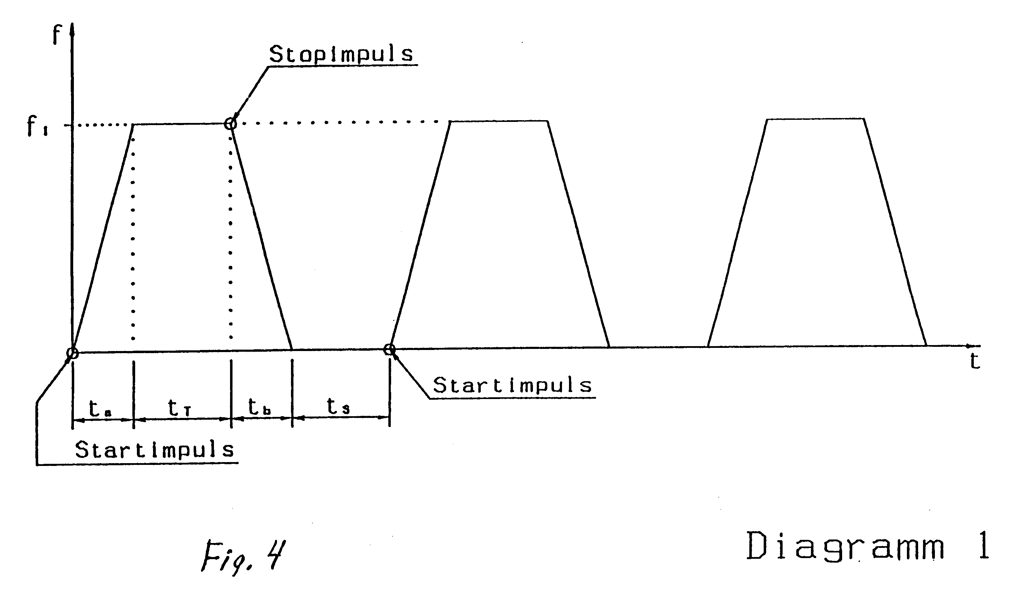

Ist der Zwischengärschrank 2 gestartet, so erfolgt jeweils in Abhängigkeit der Stellung der Teigtassen 8 im Übergabepunkt 26 die Betätigung des Schalters 25 durch einen Schaltnocken 24. Der hierbei ausgelöste Startimpuls gelangt zu dem Frequenzumformer 4 und startet nun die Teigteilmaschine 1. Diese führt jetzt mit der am Frequenzumformer 4 eingestellten Frequenz von der Steuereinrichtung 3 einen Arbeitszyklus entsprechend dem Diagramm 1 (Fig.4) aus. Das heisst wie folgt: Nach dem Startimpuls beschleunigt der Antriebsmotor 19 innerhalb der Anfahrzeit Ta entlang einer Startrampe zur Arbeitsfrequenz f₁ Mit dieser Frequenz arbeitet der Antriebsmotor 19 bis über den mit dem Antrieb in Wirkungsverbindung stehenden Schaltnocken 6 ein Stoppschalter 7 betätigt wird und ein Stoppimpuls für die Abbremszeit ausgelöst wird. Hiernach wird der Antriebsmotor 19 entlang einer im Frequenzumformer 4 abgelegten Bremsrampe in Richtung Stillstand abgebremst. Die Stillstandszeit Ts richtet sich nach der Summe aus der durch Ta,Tt und Tb verbrauchten Zeit und der durch die Geschwindigkeit V₁ des Zwischengärschrankes 2 verbleibenden Zeit bis zur Auslösung des nächsten Startimpulses durch den Schalter 25.
Alle bei diesem Start-Stop-Betrieb im Diagramm 1 dargestellten Parameter sind variabel. Sie können entweder gemeinsam innerhalb eines Parametersatzes aktiviert, oder auch einzeln verstellt werden. Der Paramtersatz kann weiter umfassen: Spannungsanhebung (Boost), Strombegrenzung, Jogfrequenz, Minimal- und Maximalfrequenz. Die Stillstandzeit Ts, die zwischen zwei ausgeführten Maschinentakten liegt, ist ebenfalls variabel und wird von dem Zwischengärschrank 2 vorgegeben. Wählt man die Steigung der Rampen (Beschleunigungsrampe oder Bremsrampe) in der Weise, dass die Gesamttaktzeit länger wird als die zur Verfügung stehende Zykluszeit, so kommt der nächste Startimpuls während sich das System z.B. noch auf der Bremsrampe befindet. Dieser Fall wird in Diagramm 2 dargestellt. Es lässt sich auf diese Weise ein nahezu kontinuierlicher, aber trotzdem zwischen Start- und Stopsignal geführter Betrieb einstellen. Damit wird die Maschinenbelastung minimiert, die Teigschonung optimiert und die Ablegegenauigkeit maximiert.

Zur Erreichung der gleichen Arbeitsgeschwindigkeiten wird die Frequenz am Frequenzumformer so eingestellt, dass die Geschwindigkeiten V₁ und V₂ im Übergabepunkt 26 angepasst sind, wodurch eine exakte Übergabe der Teiglinge immer möglich ist, da der Start der Teigteilmaschine 1 in Abhängigkeit der Übergabeposition 26 jeweils gestartet wird und über den regelbaren Arbeitszyklus exakt gesteuert wird.

Die erfindungsgemässe Ansteuerung des Antriebsmotors 19, d.h. der Aufbau des Drehmomentes wird über bei Teigteil-und Rundwirkmaschinen bekannten Übertragungselementen, wie z.B. Treibriemen 191, Kurbeltrieb 192, Gestänge 193, 194, 197, sowie Drehpunkt 195 und Anlenkpunkt 196 auf den Förderkolben 121 übertragen. Durch diesen wird nunmehr der aus den Teigrichter 11 in eine Förderkammer 12 eingesaugte Teig teigschonend in die Messkammern der Drehschiebereinheit 13 gepresst. Es kann also die Beschleunigungszeit des Förderkolbens 121 so geregelt werden, dass der Druck am Teig sich langsam aufbaut und mittels regelbarer Taktzeit der Teig entsprechend schonend in die Messkammern gepresst wird.
Mit diesem Antriebssystem ist es erstmals möglich, produktspezifische Anpassungen durchzuführen und so zu optimalen Teigergebnissen zu gelangen.

Bei den aus dem Stand der Technik bekannten Antriebssystemen für Teigteilmaschinen ist die Antriebsgeschwindigkeit des Förderkolbens innerhalb eines Taktes konstant. Der Förderkolben liegt somit in relativ kurzer Zeit mit seinem ganzen Druck an dem Teig und presst den Teig in die Messkammer. Da hier Frequenz, Beschleunigungszeit, Taktzeit und Abbremszeit nicht regelbar sind, kann keine Anpassung an den Teig vorgenommen werden, insbesondere sind bisher keine produktspezifischen Variationen des dynamsichen Teigdrucks im Teilprozess möglich, während gleichzeitig die nahezu volle Stundeleistung aufrecht erhalten bleibt.

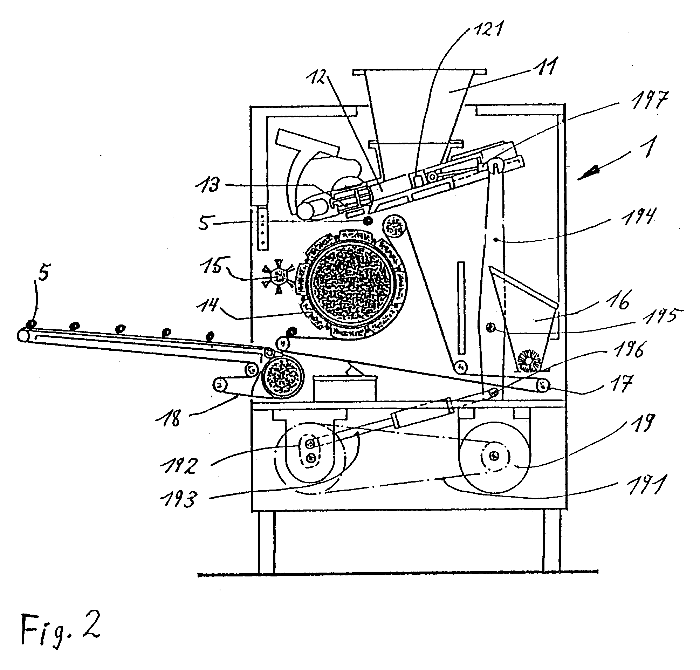

Die Anpassung der bekannten Teigteilmaschinen an veränderte Zeiten der Nachfolgeeinrichtung (z.B. längere Zwischengärzeit) kann nur durch eine Verlängerung der Pausen zwischen zwei Arbeitstakten oder durch Veränderung der gesamten Antriebsgeschwindigkeit (ohne Anpassungsmöglichkeiten) erfolgen.
Die Beschreibung der Funktion der weiteren in der Fig. 2 dargestellten Bauteile, wie Mehlstreuer 16, Wirkband 17, Reinigungsbürste 15, Spreizbänder 18, Drehschiebermesseinheit 13 und deren Antriebsverknüpfung wird nicht für erforderlich gehalten, da sie nicht erfindungswesentlich sind und ausserdem dem Fachmann hinreichend bekannt sind.

Es versteht sich, dass die beschriebene teigschonende Antriebstechnik bei Teigteilmaschinen auch dann eingesetzt werden kann, wenn der Startimpuls nicht von einer Nachfolgeeinrichtung ausgelöst wird, sondern, wie z.B. bei einer manuellen Abnahme der Teiglinge, die Aktivierung der Einzel- oder Parametersätze im Frequenzumformer 4 von einer Schnittstelle oder von Hand über Tastatur erfolgen, und die Maschine mit diesen Antriebsdaten kontinuierlich oder taktweise (über elektronische Taktgeber) läuft. Die Arbeitsgeschwindigkeit der Teigteilmaschine kann problemlos der Arbeitsleistung des Bedienenden oder einer Fremdnachfolgeeinrichtung (Nachfolgeeinrichtung von einer anderen Firma) angepasst werden.

## Patentansprüche

1. Verfahren zur Ansteuerung einer Kopfmaschine und wenigstens einer Nachfolgeeinrichtung zur Aufbereitung von Teiglingen, die jeweils mit einem eigenen Antriebsmotor versehen sind, wobei die in der als Teigteil-und Rundwirkmaschine ausgebildete Kopfmaschine abgeteilten Teiglinge über ein der Kopfmaschine zugeordnetes Transportband der Nachfolgeeinrichtung übergeben werden, wobei wenigstens ein Antrieb regelbar ausgebildet ist und der Synchronlauf der Kopfmaschine mit der Nachfolgeeinrichtung über Programmschalter, sowie mit Schaltnocken versehene Steuerwelle und Stopschalter erfolgt, dadurch gekennzeichnet, dass dem Antriebsmotor (19) der Kopfmaschine (1) ein Frequenzumformer (4) zugeordnet ist, mit dem verschiedene Frequenzen und somit unterschiedliche Geschwindigkeiten einstellbar sind, wobei das zu übertragende Drehmoment des Antriebsmotors (19) über eine Anfahrzeit (Ta), entlang einer Startrampe, zur Arbeitsfrequenz (f1) aufgebaut wird und kurz vor Erreichung des Arbeitstaktendes über einen mit dem Antrieb in Wirkungsverbindung stehenden Schaltnocken (6) ein Stoppschalter (7) betätigt wird, durch dessen Stoppimpuls der Antriebsmotor (19) über eine Abbremszeit (Tb), entlang einer Bremsrampe, in Richtung Stillstand gefahren wird und danach erneut ein Startimpuls erfolgt, der in Abhängigkeit einer exakten Teiglingsübergabeposition in einer Nachfolgeeinrichtung durch einen Schaltnocken und Startschalter ausgelöst wird.

2. Verfahren zur Ansteuerung einer Teigteil-und Rundwirkmaschine, von der die abgeteilten Teiglinge über ein Spreizband direkt in Teigtassen eines Gehänges eines Zwischengärschrankes überführt werden, nach Anspruch 1, dadurch gekennzeichnet, dass dem Antriebsmotor (22) für das Gehänge (27) ein Frequenzumformer (23) zugeordnet ist, dem eine über eine Steuereinrichtung (3) wählbare Geschwindigkeit V₁ vorgegeben wird, wobei nach dem Start des Gehänges (27) in Abhängigkeit der jeweiligen Stellung einer Teigtassenreihe (8) im Übergabepunkt (26) über einen Schaltnocken (24) der Startimpuls über einen Schalter (25) für den Frequenzumformer (4) erfolgt, dem in Abhängigkeit von V₁ eine Geschwindigkeit V₂ von der Steuereinrichtung (3) vorgegeben ist, wobei die einzelnen zu einem Arbeitszyklus gehörenden Zeiten (Ta,Tt,Tb,Ts) der Teigteil- und Rundwirkmaschine (1) so geregelt sind, dass jeweils bei der Übergabe der Teiglinge (5) am Übergabepunkt (26) die Geschwindigkeit V₁ und V₂ angepasst sind.

3. Verfahren zur Ansteuerung nach Anspruch 1 und 2, dadurch gekennzeichnet, dass von der Steuereinrichtung (3), die als Speicherpgrogrammierbare Steuerung (SPS) ausgebildet ist, ein Paramtersatz im Frequenzumformer (4) aktiviert wird, der die einzelnen Zeiten des Arbeitszyklus der Kopfmaschine (1) ablaufen lässt.

4. Verfahren zur Ansteuerung nach Ansprüchen 1 und 2, dadurch gekennzeichnet, dass die Zeiten (Ta bis Ts) einzeln für sich im Frequenzumrichter (4) verstellt werden.

5. Verfahren zur Ansteuerung nach einem oder mehreren Ansprüchen 1 bis 4, dadurch gekennzeichnet, dass die Anfahrzeit (Ta) in Abhängigkeit der Teigkonsistenz für einen langsamen Druckaufbau in der Förderkammer (12) der Teigteilmaschine relativ lang (0 bis 360 Sek) gewählt werden kann oder nach einer kurzen Arbeitstaktzeit (Tt) (0,1 bis 10 Sek) eine lange Abbremszeit (Tb) (0-360 Sek) folgt, der sich eine Stillstandzeit (Ts), deren Dauer in Abhängigkeit der von (Ta,Tt und Tb) verbrauchten Zeit bis zum nächsten von den Startschalter (25) gegebenen Startimpuls reicht, anschliesst (vergl. Diagramm 1).

6. Verfahren zur Ansteuerung nach einem oder mehreren der Ansprüche 1 bis 4, dadurch gekennzeichnet, dass der Arbeitszyklus der Kopfmaschine (1) ohne Stillstandszeit (Ts) entsprechend einer dem Frequenzumformer auf gegebenen Jogfrequenz (Diagramm 2) abläuft.

7. Vorrichtung zur Durchführung des Verfahrens nach einem oder mehreren der Ansprüche 1 bis 6 bestehend aus einer Kopfmaschine und wenigstens einer Nachfolgeeinrichtung zur Aufbereitung von Teiglingen, die jeweils mit einem eigenen Antriebsmotor versehen sind, wobei die in der als Teigteil-und Rundwirkmaschine ausgebildete Kopfmaschine abgeteilten Teiglinge über ein der Kopfmaschine zugeordnetes Transportband der Nachfolgeeinrichtung übergeben werden, wobei wenigstens ein Antrieb regelbar ausgebildet ist und der Synchronlauf der Kopfmaschine mit der Nachfolgeeinrichtung über Programmschalter, sowie mit Schaltnocken versehene Steuerwelle und Stoppschalter erfolgt, dadurch gekennzeichnet, dass dem Antriebsmotor (19) der Kopfmaschine (1) ein Frequenzumformer (4) zugeordnet ist, mit dem verschiedene Frequenzen und somit unterschiedliche Geschwindigkeiten einstellbar sind, wobei das zu übertragende Drehmoment des Antriebsmotors (19) über eine Anfahrzeit (Ta), entlang einer Startrampe, zur Arbeitsfrequenz (f1) aufgebaut wird und kurz vor Erreichung des Arbeitstaktendes über einen mit dem Antrieb in Wirkungsverbindung stehenden Schaltnocken (6) ein Stoppschalter (7) betätigt wird, durch dessen Stoppimpuls der Antriebsmotor (19) über eine Abbremszeit (Tb), entlang einer Bremsrampe, in Richtung Stillstand gefahren wird und danach erneut ein Startimpuls erfolgt, der in Abhängigkeit einer exakten Teiglingsübergabeposition in einer Nachfolgeeinrichtung durch einen Schaltnocken und Startschalter ausgelöst wird.

8. Vorrichtung nach Anspruch 7 bestehend aus einer Teigteil- und Rundwirkmaschine, bei der der Teig in eine Förderkammer gesaugt wird und über einen mit dem Antriebsmotor über Umlenkungen und Gestänge verbundenen Förderkolben in die Messkammern eines Drehschiebers gepresst wird, von wo aus nach einer Schwenkung nach unten die Teigstücke über den Trommelrundwirker über ein Spreizband direkt in die Teigtassen eines Zwischengärschrankes überführt werden, dadurch gekennzeichnet, dass dem Antriebsmotor (22) für das Gehänge (27) ein Frequenzumformer (23) zugeordnet ist, dem eine über die Steuereinrichtung (3) in Abhängigkeit der jeweiligen Teiglingsart eine Geschwindigkeit V₁ vorgegeben wird, wobei ein Schaltnocken (24) mit dem Antrieb des Gehänges (27) so in Wirkungsverbindung steht, dass sofern sich eine Teigtassenreihe (8) kurz vor dem Übergabepunkt (26) befindet ein Schalter (25) betätigt wird und damit ein Startimpuls für den Frequenzumformer (4) erfolgt, der in Abhängigkeit von V₁ den Antriebsmotor (19) mit einer abgestimmten Geschwindigkeit V₂ betreibt, wobei innerhalb eines Arbeitszykluses die einzelnen Taktzeiten des Förderkolbens (121) (Ta,Tt,Tb,Ts) dem zu verarbeitenden Teig angepasst sind, wobei die Abbremszeit (Tb) über den Schaltnocken (6) und Stopschalter (7) ausgelöst wird.

## Claims

1. Method for the control of a head machine and at least one following equipment for the preparation of dough pieces, which equipments are each provided with an individual drive motor, wherein the dough pieces, which had been severed off in the head machine constructed as dough-dividing and circular kneading machine, are transferred to the following equipment by way of a transport belt associated with the head machine, wherein one drive is constructed to be regulable and the synchronous running of the head machine with the following equipment is effected by way of program switches as well as a control shaft, which is provided with switching cams, and stop switches, characterised thereby, that the drive motor (19) of the head machine (1) is associated with a frequency converter (4), by which different frequencies and thus different speeds are settable, wherein the torque of the drive motor (19) to be transmitted is built up to the operating frequency (f1) along a starting slope over a start-up time (Ta) and a stop switch (7), by the stop pulse of which the drive motor (19) is moved in the direction towards standstill along a braking slope over a braking time (Tb), is actuated by a switching cam (6), which stands in operative connection with the drive, shortly before reaching the end of the operating cycle and a starting pulse, which is initiated by a switching cam and a start switch in dependence on an exact dough piece transfer position in a following equipment, takes place anew thereafter.

2. Method for the control of a dough-dividing and circular kneading machine, from which the dough pieces, which had been severed off in the head machine, are transferred by way of a spreading belt directly into dough cups of a hanger system of an intermediate fermentation cabinet, according to claim 1, characterised thereby, that the drive motor (22) for the hanger system (27) is associated with a frequency converter (23), for which a speed V₁ is preset, which is selectable by way of a control equipment (3), wherein - after the starting of the hanger system (27) and in dependence on the respective setting of a dough cup row (8) in the transfer point (26) - the start pulse for the frequency converter (4), for which a speed V₂ is preset by the control equipment (3) in dependence on V₁, is effected by way of a switching cam (24) and a switch (25), wherein the individual times (Ta, Tt, Tb, Ts) belonging to an operating cycle of the dough dividing and circular kneading machine (1) are so regulated that the speeds V₁ and V₂ are matched each time for the transfer of the dough pieces (5) at the transfer point (26).

3. Method of control according to claim 1 and 2, characterised thereby, that the control equipment (3), which is constructed as storage-programmable control (SPS), activates a parameter set in the frequency converter (4), which lets the individual times of the operating cycle of the head machine (1) run down.

4. Method of control according to claims 1 and 2, characterised thereby, that the times (Ta to Ts) are each individually adjusted in the frequency converter (4).

5. Method of control according to one or more of the claims 1 to 4, characterised thereby, that the start-up time (Ta) can be chosen in dependence on the dough consistency to be relatively long (0 to 360 seconds) for a slow build-up of pressure in the conveying chamber (12) of the dough-dividing machine or a long braking time (Tb) follows after a short operating cycle time (Tt) (0.1 to 10 seconds) and is followed by a standstill time (Ts) the duration of which reaches to the next starting pulse given by the starting switch (25) in dependence on the time used by (Ta, Tt and Tb) (compare diagram 1).

6. Method of control according to one or more of the claims 1 to 4, characterised thereby, that the operating cycle of the dough-dividing and circular kneading machine (1), runs down without standstill time (T_{S}) in accordance with a jog frequency imposed on the frequency converter (diagram 2)

7. Device for the performance of method according to one or more of the claims 1 to 6 and consisting of a head machine and at least one following equipment for the preparation of dough pieces, which equipments are each provided with an individual drive motor, wherein the dough pieces, which had been severed off in the head machine constructed as dough-dividing and circular kneading machine, are transferred to the following equipment by way of a transport belt associated with the head machine, wherein one drive is constructed to be regulable and the synchronous running of the head machine with the following equipment is effected by way of program switches as well as a control shaft, which is provided with switching cams, and stop switches, characterised thereby, that the drive motor (19) of the head machine (1) is associated with a frequency converter (4), by which different frequencies and thus different speeds are settable, wherein the torque of the drive motor (19) to be transmitted is built up to the operating frequency (f1) along a starting slope over a start-up time (Ta) and a stop switch (7), by the stop pulse of which the drive motor (19) is moved in the direction towards standstill along a braking slope over a braking time (Tb), is actuated by a switching cam (6), which stands in operative connection with the drive, shortly before reaching the end of the operating cycle and a starting pulse, which is initiated by a switching cam and a start switch in dependence on an exact dough piece transfer position in a following equipment, takes place anew thereafter.

8. Device according to claim 7 and consisting of a dough-dividing and circular kneading machine in which the dough is sucked into a conveying chamber and urged into the metering chambers of a rotary slide by a conveying piston connected with the drive motor by way of deflecting devices and linkages, from where the dough pieces are after a downward pivotation transferred by way of the circular drum kneader by a spreading belt directly into the dough cups of an intermediate fermentation cabinet, characterised thereby, that the drive motor (22) for the hanger system (27) is associated with a frequency converter (23), for which a speed V₁ is preset in dependence on the respective kind of dough, wherein a switching cam (24) so stands in operative connection with the drive of the hanger system (27) that, when a dough cup row (8) is situated shortly in front of the transfer point (26), a switch (25) is actuated and a starting pulse for the frequency converter (4) is caused thereby, which in dependence on V₁ operates the drive motor (19) at a matched speed V₂, wherein the individual times (Ta, Tt, Tb, Ts) of the conveying piston (121) within an operating cycle are adapted to the dough to be processed and wherein the braking time (Tb) is initiated by way of the switching cam (6) and the stop switch (7).

## Revendications

1. Procédé de pilotage d'une machine de tête et d'au moins un dispositif qui la suit, destinés à préparer des pâtons, et qui comportent chacun son propre moteur, les pâtons divisés dans la machine de tête, qui est une machine diviseuse de pâte à distributeur rotatif, étant transférés à ce dispositif suivant par une bande transporteuse coopérant avec cette machine de tête, l'un au moins de dispositifs d'entraînement étant réglable et la marche de la machine de tête étant synchronisée avec celle du dispositif suivant, par l'entremise d'un commutateur programmé, d'un arbre de commande à cames de commutation et d'un interrupteur d'arrêt, procédé caractérisé en ce qu'est associé au moteur (19) de la machine de tête (1) un convertisseur (4) de fréquence avec lequel diverses fréquences et par conséquent diverses vitesses peuvent être établies, le couple de rotation de ce moteur (19) augmentant pendant la période de démarrage (Ta) conformément à une rampe de démarrage, jusqu'à la fréquence de travail (f₁), et, peu avant la fin de la période de travail, une came (6) coopérant avec le moteur, actionne un interrupteur d'arrêt (7) dont l'impulsion d'arrêt fait fonctionner le moteur (19) pendant une période de ralentissement (Tb) dans le sens de l'arrêt, conformément à une rampe de ralentissement ; puis est produite de nouveau une impulsion de démarrage qui est déclenchée par une came ou un interrupteur de démarrage, en fonction de l'exactitude de la présence d'un pâton en position de transfert dans le dispositif suivant.

2. Procédé de pilotage d'une machine diviseuse de pâte à mécanisme distributeur rotatif, d'où les pâtons séparés sont amenés directement par une bande d'espacement dans les coupelles du convoyeur suspendu d'une armoire de pointage, suivant la revendication 1, procédé caractérisé en ce qu'est associé au moteur (22) du convoyeur suspendu (27) un convertisseur de fréquence (23), auquel est allouée une vitesse v₁ choisie par un dispositif de commande (3), de sorte que, lorsque le convoyeur (27) a été mis en marche en fonction de la position des coupelles (8) par rapport au point de transfert (26), une came (24) fait délivrer par un interrupteur (25) une impulsion de mise en marche pour le convertisseur (4) auquel le dispositif de commande (3) alloue une vitesse v₂ fonction de v₁, ce qui règle les périodes (Ta, Tt, Tb, Ts) d'un cycle de la machine (1) diviseuse de pâte à mécanisme distributeur rotatif, de façon qu'à chaque transfert d'un pâton (5) au point de transfert (26), les vitesses v₁ et v₂ sont coordonnées .

3. Procédé de pilotage selon les revendications 1 et 2, caractérisé en ce que le dispositif de commande (3), qui a la conformation d'une commande à programmes mémorisés (SPS), active dans le convertisseur (4) de fréquence, une série de paramètres qui font se dérouler les diverses périodes du cycle de travail de la machine de tête (1).

4. Procédé de pilotage selon les revendications 1 et 2, caractérisé en ce que les durées de périodes (Ta à Ts) sont modifiées individuellement dans le convertisseur (4) de fréquence.

5. Procédé de pilotage selon une ou plusieurs des revendications 1 à 4, caractérisé en ce que la période de démarrage (Ta) peut être choisie relativement longue (0 à 360 s) suivant la consistance de la pâte, pour que la compression dans la chambre d'alimentation (12) du mécanisme diviseur augmente lentement, ou bien une période de travail (Tb) courte (0,1 à 10 s) est suivie d'une période de ralentissement (Tb) longue (0 à 360 s) à laquelle fait suite une période d'arrêt (Ts) dont la durée va, en fonction du temps pris par (Ta, Tt et Tb) jusqu'à l'impulsion de démarrage suivante émise par l'interrupteur de démarrage (25) (voir diagramme 1).

6. Procédé de pilotage selon une ou plusieurs des revendications 1 à 4, caractérisé en ce que le cycle de travail de la machine de tête (1) est effectué sans période d'arrêt (Ts) conformément à une fréquence d'impulsions pas à pas, allouée au convertisseur de fréquence (diagramme 2).

7. Dispositif pour la mise en oeuvre du procédé selon l'une ou plusieurs des revendications 1 à 6, composé d'une machine de tête et d'au moins un dispositif suivant destinés à préparer des pâtons, et comportant chacun leur propre moteur, les pâtons divisés dans cette machine de tête (constituée d'un mécanisme diviseur de pâteet d'un mécanisme distributeur rotatif ), étant délivrés au dispositif suivant par une bande convoyeuse coopérant avec cette machine de tête, l'un au moins des groupes d'entraînement étant réglable et la synchronisation de la machine de tête avec le dispositif suivant étant réalisée par l'entremise d'un commutateur programmé ainsi que d'un arbre de commande équipé de cames de commutation et d'un interrupteur d'arrêt, dispositif caractérisé en ce qu'il est associé au moteur (19) de la machine de tête (1) un convertisseur (4) de fréquence, avec lequel diverses fréquences et donc diverses vitesses peuvent être établies, le couple de rotation de ce moteur (19) augmentant pendant une période de démarrage (Ta) jusqu'à la fréquence de travail (f₁) conformément à une rampe de démarrage et, peu avant la fin de la période de travail, une came de commande (6), qui coopère avec le moteur, actionne un interrupteur d'arrêt (7) dont l'impulsion d'arrêt fait passer le moteur à l'arrêt en suivant une rampe de ralentissement pendant une période de ralentissement (Tb) ; puis est produite de nouveau une impulsion de démarrage qui est déclenchée en fonction de l'exactitude de la présence d'un pâton en position de transfert dans le dispositif suivant, par une came de commande et l'interrupteur de démarrage.

8. Dispositif selon la revendication 7, composé d'une machine diviseuse de pâte à mécanisme distributeur rotatif, dans laquelle la pâte d'une chambre d'alimentation est aspirée et est comprimée, par un piston d'alimentation relié au moteur par des articulations et des tringleries, dans les chambres de dosage d'un appareil à organe distributeur rotatif, d'où, après pivotement vers le bas (de cet appareil), les pâtons sont transférés par l'entremise d'un tambour distributeur et d'une bande d'espacement, directement dans les coupelles d'une armoire de pointage, dispositif caractérisé en ce qu'est associé au moteur (22) du convoyeur suspendu (27) un convertisseur de fréquence (23) auquel le dispositif de commande (3) affecte, en fonction de la nature de la pâte, une vitesse v₁, une came de commande (24) étant reliée au moteur du convoyeur (27) de façon à actionner, dès qu'une rangée de coupelles (8) se trouve peu avant le point de transfert (26), un interrupteur (25) en produisant pour le convertisseur (4) de fréquence, une impulsion de démarrage qui entraîne le moteur (19) en fonction de v₁ à une vitesse coordonnée v₂_{,} si bien qu'au cours d'un cycle de travail les périodes de déplacement (Ta, Tt, Tb, Ts) du piston d'alimentation (121) sont adaptées à la pâte traitée, la période ralentissement (Tb) étant déclenchée par l'entremise de la came (6) et de l'interrupteur d'arrêt (7).
